# EUROPÄISCHE PATENTSCHRIFT

(11) **EP 0 384 269 B1**
(45) Veröffentlichungstag und Bekanntmachung des Hinweises auf die Patenterteilung: **10.05.1995**
(21) Anmeldenummer: 90102787.0
(22) Anmeldetag: 13.02.1990
(51) Int. Cl.: G06K 11/10, G06K 11/16, G06F 3/033

(54) **Digitalisiertablett**
Digitizing table
Tablette numérisatrice

(30) Priorität: 23.02.1989 CH 668/89
(43) Veröffentlichungstag der Anmeldung: 29.08.1990
(73) Patentinhaber: KONTRON ELEKTRONIK GMBH, D-85386 Eching (DE); MÜLLER, Udo, D-80995 München (DE)
(72) Erfinder: Müller, Udo, D-8000 München 50 (DE)
(74) Vertreter: Dirscherl, Josef

(56) Entgegenhaltungen:
- DE-C- 3 608 706
- IEEE COMMUNICATIONS MAGAZINE, Band 24, Nr. 7, Juli 1986, Seiten 18-23, IEEE,New York, US; K. HASUI et al.: "Man-machine interfaces in office communication systems"
- MEASUREMENT AND CONTROL, Band 5, Mai 1972, Nr. 5, Seite 224, NP957; "Product review"

## Beschreibung

Die Erfindung betrifft ein Digitalisiertablett mit einer im wesentlichen rechteckigen, Leiterbahnen enthaltenden Platine und elektronischen Ansteuerungs- und Meßschaltungen.

Aus IEEE Communications Magazine, Bd. 24, Heft 7, Juli 1986, Seiten 18 bis 23, ist es bekannt, einen elektrolumineszierenden Anzeigebildschirm mit einer 0,4 mm dicken Polyesterfolie zu belegen, die InTiO₂-beschichtet ist, wodurch diese als Meßelement Verwendung finden kann. Das so entstandene, einige Zentimeter dicke Gerät hat dann zwei Funktionen: Anzeigebildschirm und durchsichtiges Tablett.

Entsprechend der monitorartigen Bauweise müssen bei dieser Baueinheit handschriftliche Informationen an einer schräg stehenden Fläche eingegeben werden. Deshalb scheidet das maßgenaue Eingeben komplizierter Zeichnungen und dergleichen von Hand bei diesem System praktisch aus.

Bekannte Digitalisiertabletts, die zum Eingeben von Zeichnungen und anderen komplizierteren Informationen von Hand, ggf. unter Zuhilfenahme von Zeichenwerkzeugen, bestimmt sind, haben meist eine Pult- bzw. Keilform oder eine flache Form mit einer Dicke von mindestens 5 bis 8 mm bis zu 150 mm. Dabei befindet sich die mit Leiterbahnen versehene Eingabeschicht in einem Rahmen. Die Pult- bzw. Keilform ergibt sich dabei dadurch, daß Platz für den Einbau der Elektronik geschaffen wird.

Neuerdings gibt es auch Digitalisiertabletts, bei denen die elektronischen Ansteuerungs- und Meßschaltungen in einem separaten Gehäuse am Rande des Tabletts zusammengefaßt sind, so daß auf diese Weise das Tablett selbst nicht mehr pult- bzw. keilförmig ausgeführt ist.

Dem Vorteil des wesentlich flacheren Tabletts steht der Nachteil entgegen, daß das Gehäuse für den Elektronikteil über die Oberfläche des Tabletts hinausragt und damit das freie Arbeiten auf dem Tablett behindert.

Aus der DE 36 08 706 Cl ist ein Digitalisiertablett, bei dem ein Schaltungsgehäuse mit elektronischen Ansteuerungs- und Meßschaltungen an einem Rande des flachen Tabletts angeordnet ist, bekannt.

Eine andere bekannte Lösung besteht darin, den Elektronikteil ganz vom Tablett zu trennen und in einem separaten Gehäuse unterzubringen, das so plaziert werden kann, daß es nicht stört, z.B. unter dem Tisch. Diese Lösung ist aber aus verschiedenen Gründen, z.B. wegen der erforderlichen langen Verbindungskabel, unhandlich.

Der Erfindung liegt die Aufgabe zugrunde, ein Digitalisiertablett der eingangs genannten Art zu schaffen, das aufgrund sehr flacher Ausbildung vielseitig verwendbar und ergonomisch vorteilhaft ist und bei dem die Behinderung durch das Gehäuse für den Elektronikteil möglichst gering gehalten wird.

Erfindungsgemäß wird diese Aufgabe mit den Merkmalen des kennzeichnenden Teils des Patentanspruchs 1 gelöst.

Weiterbildungen der Erfindung ergeben sich aus den Unteransprüchen.

Im folgenden ist anhand der beiliegenden Zeichnungen ein Ausführungsbeispiel der Erfindung näher beschrieben. Es zeigen
- Fig. 1: eine perspektivische Darstellung eines Digitalisiertabletts nach der Erfindung, und
- Fig. 2: eine Aufsicht auf eine Ausführungsform des erfindungsgemäßen Digitalisiertabletts.

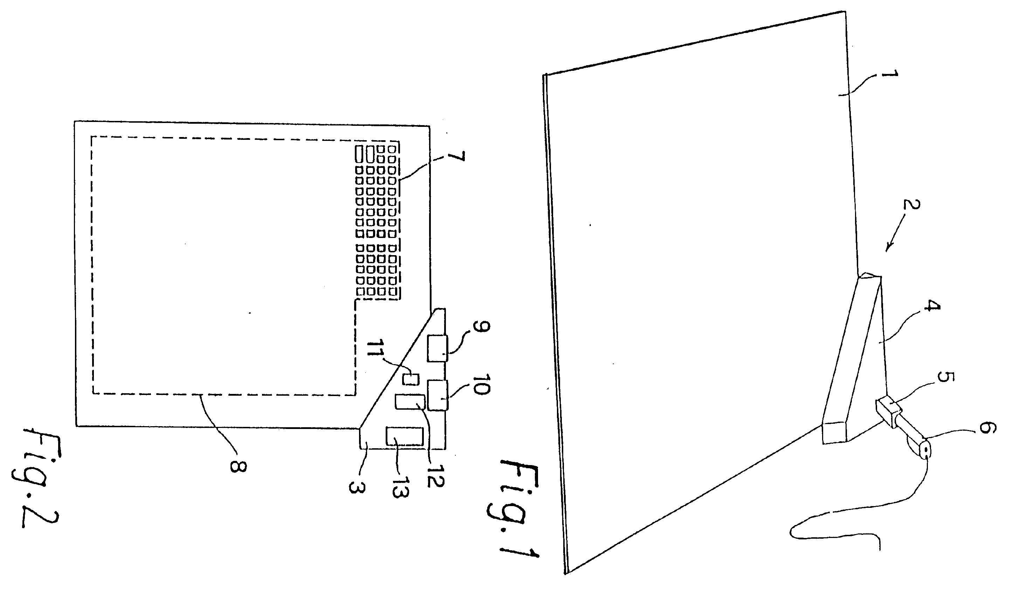

Das in Figur 1 gezeigte Digitalisiertablett ist ewa 36 cm breit und 45 cm hoch. Seine Dicke beträgt ca. 2 mm. Es besteht aus einer mit den üblichen Leiterbahnen versehenen Platine 1 aus glasfaserverstärktem Kunststoff, die versiegelt ist. Alternativ kann als Trägermaterial für die Leiterbahnen eine flexixble Kunststoffolie verwendet werden. Damit kann die Dicke des fertigen Tabletts bis auf weniger als 0,5 mm reduziert werden. Aus meßtechnischen Gründen wird eine Abschirmung oder ein Gehäuse nicht benötigt.

An der rechten oberen Ecke ist ein Gehäuse 2 für die elektronische Ansteuerungs- und Meßschaltung angeordnet. Das Gehäuse 2 hat einen dreieckigen Grundriß und besteht aus einem unteren Teil 3 und einem Oberteil 4, die miteinander und mit der Platine 1 fest verbunden sind. Im Inneren ist genügend Platz für die erforderlichen elektronischen Bauelemente vorgesehen.

Auf dem Oberteil des Gehäuses ist ein Halter 5 für den Stift 6 vorgesehen. Dieser Stifthalter 5 kann so mit dem Gehäuse 2 verbunden sein, daß er abnehmbar ist. Vorzugsweise ist er auch gegenüber dem Gehäuse drehbar, wobei zwei Positionen durch eine Raste oder dergleichen definiert werden. Diese zwei Positionen entsprechen der jeweils für rechts- und linkshändige Bedienung optimalen Schräglage.

In der in Figur 2 gezeigten Aufsicht auf das Tablett ist ein Menüfeld 7 eingezeichnet. Das Menüfeld kann entweder auf dem Tablett aufgedruckt sein oder es ist nur über eine aufzulegende Schablone verfügbar. Die gestrichelte Linie 8 zeigt die gesamte aktive Fläche des Tabletts.

Das Menuü ist auf der Meßseite und auf der Rückseite verfügbar. Auch kann sowohl die Meßseite als auch wahlweise die Rückseite als Meßfläche verwendet werden.

Vom Gehäuse 2 für die elektronischen Bauelemente ist in Figur 2 der obere Teil abgenommen. Dadurch sind in schematischer Darstellung die einzelnen Bauelemente sichtbar. Sie umfassen zwei Stecker 9, 10, einen Mikroprozessor 11, einen Stecker 12 für ein sogenanntes PROM und eine Anschlußbuchse 13 für ein zu den Tablettleitern führendes Flachkabel (nicht gezeigt). Weitere Elemente, die in der Schaltung typischerweise vorhanden sind, wurden der Übersichtlichkeit halber in diesr schematischen Darstellung weggelassen. So sind beispielsweise die Verbindungsleiter der Elemente untereinander auf dieser Seite der im Gehäuse eingelegten Platine nicht sichtbar.

Ein besonderer Vorteil der erfindungsgemäßen Ausbildung des Digitalisiertabletts besteht darin, daß sich das störende Gehäuse für die elektronischen Bauelemente asymmetrisch an einer Ecke des Tabletts befindet und damit das Arbeiten auf dem Tablett möglichst wenig beeinträchtigt. Insbesondere können sowohl in senkrechter als auch in waagerechter Richtung über das Tablett hinausragende Zeichengeräte, wie beispielsweise Lineale und dergleichen, angelegt werden. Außerdem ergibt sich durch die asymmetrische Anordnung sozusogen auf natürliche Weise ein Bereich neben dem Elektronikgehäuse, der in Figur 2 für das Menüfeld ausgewiesen ist. Die verbleibende Arbeitsfläche ist damit wiederum rechteckig oder quadratisch.

Anstelle der dreieckigen Grundrißform ist auch eine quadratische oder allgemein viereckige Grundrißform für das Elektronikgehäuse möglich. Auch diese Form hat die wesentlichen Vorteile der asymmetrischen Anordnung.

## Patentansprüche

1. Digitalisiertablett mit einer im wesentlichen rechteckigen, Leiterbahnen enthaltenden Platine und elektronischen Ansteuerungs- und Meßschaltungen,
dadurch **gekennzeichnet**, daß
- die Dicke der Platine weniger als 3 mm beträgt,
- die Schaltungen in einem an einer Ecke der Platine (1) integral angeordneten Schaltungsgehäuse (2) untergebracht sind, und
- das Schaltungsgehäuse (2) eine im wesentlichen drei- oder viereckige Bodenfläche besitzt und mit zwei benachbarten Kanten derselben parallel zu Kanten des Digitalisiertabletts angeordnet ist.

2. Digitalisiertablett nach Anspruch 1,
dadurch **gekennzeichnet**, daß die Platine (1) aus einem mit den Leiterbahnen versehenen glasfaserverstärkten Kunststoff besteht.

3. Digitalisiertablett nach Anspruch 1,
dadurch **gekennzeichnet**, daß die Platine (1) aus einer mit den Leiterbahnen versehenen Kunststoffolie besteht.

4. Digitalisiertablett nach einem der vorhergehenden Ansprüche,
dadurch **gekennzeichnet**, daß ein Menüfeld (7) vorgesehen ist, das in einem Bereich zwischen dem Schaltungsgehäuse (2) und einer benachbarten weiteren Ecke der Platine angeordnet ist.

## Claims

1. A digitizing table or tray having a substantially rectangular printed circuit board containing conductor tracks and electronic control circuits and measuring circuits, characterised in that
- the thickness of the printed circuit board is less than 3 mm;
- the circuits are accommodated within an integral circuit housing (2) arranged on one corner of the printed circuit board (1); and
- the circuit housing (2) has a substantially triangular or rectangular base area, with two of its neighbouring edges arranged parallel to the edges of the digitizing table or tray.

2. A digitizing table or tray according to claim 1, characterised in that the printed circuit board (1) comprises of a glass fibre-reinforced plastics provided with conductor tracks.

3. A digitizing table or tray according to claim 1, characterised in that the printed circut board (1) comprises a plastics foil provided with conductor tracks.

4. A digitizing table or tray according to any one of the preceding claims, characterised in that a menu field (7) is provided and is arranged in an area between the circuit housing (2) and a neighbouring further corner of the printed circuit board.

## Revendications

1. Tablette à numériser comportant une platine essentiellement rectangulaire munie de chemins conducteurs et de circuits électroniques de commande et de mesure, caractérisée en ce que,
- l'épaisseur de la platine est inférieure à 3 mm,
- les circuits sont logés dans un boîtier (2) faisant corps avec un coin de la platine (1), et
- le boîtier (2) recevant les circuits a un fond essentiellement triangulaire ou quadrangulaire et deux arêtes voisines de celui-ci sont parallèles aux arêtes de la tablette à numériser.

2. Tablette à numériser selon la revendication 1, caractérisée en ce que la platine (1) se compose de matière plastique renforcée par des fibres de verre et comportant les chemins conducteurs.

3. Tablette à numériser selon la revendication 1, caractérisée en ce que la platine (1) est une feuille de matière plastique munie de chemins conducteurs .

4. Tablette à numériser selon l'une des revendications précédentes, caractérisée en ce qu'elle comporte un champ de menu (7) situé dans la zone comprise entre le boîtier (2) du circuit et un autre coin voisin de la platine.
